# EUROPEAN PATENT APPLICATION

(11) **EP 1 147 748 A2**
(43) Date of publication of application: **24.10.2001**
(21) Application number: 00125366.5
(22) Date of filing: 01.12.2000
(51) Int. Cl.: A61C 13/30

(54) **Endocanal pin for dental use and relative production method**

(30) Priority: 19.04.2000 IT MI000883
(71) Applicant: Krugg S.p.A., 20090 Buccinasco (Milano) (IT)
(72) Inventor: Beretta, Giorgio, 20123 Milano (IT)
(74) Representative: Petruzzelli, Antonio European Patent Attorney

(57) **Abstract**

An endocanal pin (1) for dental use characterised in that it comprises one or more layers (2) of fibre fabric, embedded in a resinous matrix, which wind around a support core (3) in a composite material arranged along the axis of the pin (1), said one or more layers (2) of fabric conferring to the pin (1) the mechanical parameters suitable for the application required for the pin (1) itself.

## Description

The present invention relates to an endocanal pin made to assist the prosthetic rehabilitation of teeth with partial or total coronal damage.

It is known that, when coronal damage exceeds a certain limit, it is fundamental to assist reconstruction with a support which, partially inserted and fixed in the root of the tooth and partially exposed, performs the function of increasing the surface of adhesion or of reinforcing the final tooth-reconstruction structure according to the level of loss of corona.

Nowadays a type of metal screw endocanal pin is known which however tends to concentrate forces at the threading of the screw, thus entailing a high risk of radicular fracture.

In the same way a metal endocanal pin defined as "passive" is known, i.e. without a screw, which equally entails a high risk of radicular fracture due to the difference in modulus of elasticity compared to the natural structure of the tooth.

This disadvantage is combined with the possibility of chemical and electrochemical reactions of oxidation and corrosion due to the presence of a metal element in the oral cavity.

Another type of endocanal pin known today is in a composite material made with parallel and longitudinal synthetic fibres (of carbon, glass, silica, quartz etc.) embedded in a cementing resin (mainly epoxy resin).

The material adopted for making this pin avoids the onset of oxidation phenomena in the oral cavity and reduces the number of radicular fractures, given that the pin succeeds in reproducing a modulus of elasticity for transverse loads similar to that of the radicular dentine.

One of the main disadvantages of such a pin lies in the inability to control also the modulus of resistance to vertical compression in such a way that it is close to that of the dentine. The longitudinal fibres in the pin, practically uncompressible in a longitudinal direction, at least in relation to the mastication loads to be withstood, transmit the mastication loads thus directed virtually unaltered, concentrating them at the radicular apex.

Such a pin is not yet therefore wholly free of the risk of radicular fracture with special reference to apical breakage, and leaves open the hypothesis of apical sensitivity which may lead to granulomas, particularly for applications in the incisor region where the mastication loads, when applied, are mainly vertical.

In order to attempt to overcome this limitation, a further type of pin in composite material, nowadays available commercially, provides an arrangement of the fibres with a wavy or interwoven trend, but substantially always directed along the main axis of the pin.

A pin in composite material with longitudinal or substantial longitudinal arrangement of the fibres of the type described above is also the result of a compromise between the need to obtain an ideal value of the modulus of transverse elasticity and the need to maintain the other mechanical parameters within an acceptable range of values, given that all the mechanical parameters for such a pin structure are inextricably interdependent one in relation to the other.

The object of the present invention is therefore that of providing an endocanal pin which avoids the disadvantages which can be found in the various types of endocanal pins currently in use, and also the object of the present invention is that of providing an endocanal pin in composite material which prevents or restricts to a minimum the onset of radicular fractures and apical sensitivity, which has an improved intrinsic safety and which can be used in a vast range of applications.

These objects are achieved by an endocanal pin for dental use, characterised in that it comprises one or more layers of fibre tissue, embedded in a resinous matrix, which are wound around a support core in a preferably composite material.

The mechanical parameters of the pin, such as the modulus of transverse elasticity and the moduli of compressive, tensile and shearing strength, can be controlled by predefining the composition characteristics of the layers of fibre fabric which form the pin, such as: the angle between the weft and warp of the fabric of the layers; the percentage of weft fibres compared to the warp fibres in the fabric; the orientation of the fabric layers in relation to the axial direction of the pin; and the diameter of the fibres used for the layers of fabric.

In this way the mechanical values required for the individual performances required can also be set.

The mechanical properties of the pin can also be varied locally by the placing of localised fabric layers in specific points of the support core of the pin. These localised layers must have composition characteristics which, appropriately combined with those of the underlying layers of fabric, reproduce locally the required values for the mechanical parameters of the pin.

The use of one or more layers of fibre fabric having diversifiable composition characteristics and the possibility of also placing several layers in a different position on the same support core finally allows the various mechanical parameters of the pin to be set singly and substantially independently one in relation to the other.

The production method involves moulding of the material after positioning of the layers of fibre fabric on a central support core.

If the layers of fibre fabric are not already pre-impregnated, the mould must be connected to an injector, which impregnates the fibres.

This production method allows a pin to be manufactured from any type of suitable synthetic fibre which is available in fabric, for example carbon, glass, quartz, silica fibre etc.

These aspects will be made clearer from the following description of two embodiments of the pin of the invention, to be read purely by way of a nonlimiting example of the more general principle claimed.

The following description is supported by the accompanying descriptions in which:
Fig. 1a shows a section along the axis of a pin, in accordance with the present invention inserted in the root canal;
Fig. 1b shows an enlarged and partially sectioned view from above of a pin in accordance with the first embodiment of the present invention;
Fig. 2 shows schematically the interweaving between weft and warp of the layers of fabric used in the first embodiment of the pin of the present invention, wherein the percentage of weft in the fabric is equal to 20%; and
Fig. 3 shows schematically the interweaving between weft and warp of the layers of fabric used in the first embodiment of the pin of the present invention, wherein the percentage of weft in the fabric is equal to 40%.

A first embodiment of an endocanal pin 1 in accordance with the present invention comprises carbon fibre fabric layers 2 wound around a central support core 3 in composite material.

Such a support core 3 can be obtained from rods in a composite material nowadays widely available on the market. The rods are machined to bring the diameter to the final value required and tapered at the base.

The fibres of the layers of fabric 2 which cover the central core of the pin are also embedded in an epoxy resin matrix.

The fibres of the layers of fabric 2 used for this embodiment of the pin have high resistance but, according to the applications, the use of high modulus fibres is not excluded.

If the possibility of detecting the pin in the root canal by means of radiography is required, the layers of carbon fibre fabric can be enriched with filaments, for example in glass or quartz, which are radio-detectable.

It is always preferable for the composite material of the support core to be the same as that forming the layers of fabric, in such a way as to encourage resistance to interlaminar forces at the interface between the two parts.

The method of production of the pin involves positioning the layers of fibre fabric on the central support core, and the insertion of the part obtained in this way in a mould for final forming.

The layers of fabric can be selected from among pre-impregnated material or that without resin.

At this point, in the first case, only polymerisation of the part takes place in the mould, while in the second case the mould is connected to an injector, which fills the mould with resin until the fibres are impregnated.

In the second case the injector, which performs injection of resin into the mould, remains connected to the mould under pressure to ensure optimal distribution of the resin and compensation of the polymerisation shrinkage.

The resulting pin 1 has an external diameter equal to 1.2 mm and support core equal to 0.5 mm, while the thickness of a layer of fabric 2 already embedded in the epoxy resin is equal to 0.2 mm.

Naturally, after having chosen the diameter of the fibres, the number of layers of fabric to be used is that necessary for bringing the external diameter of the pin to the required value.

The layers of fabric 2 have warp fibres 5 and weft fibres 7 interwoven with an angle of 90°, and the warp fibres 5 are in turn arranged along the axis of the pin 1.

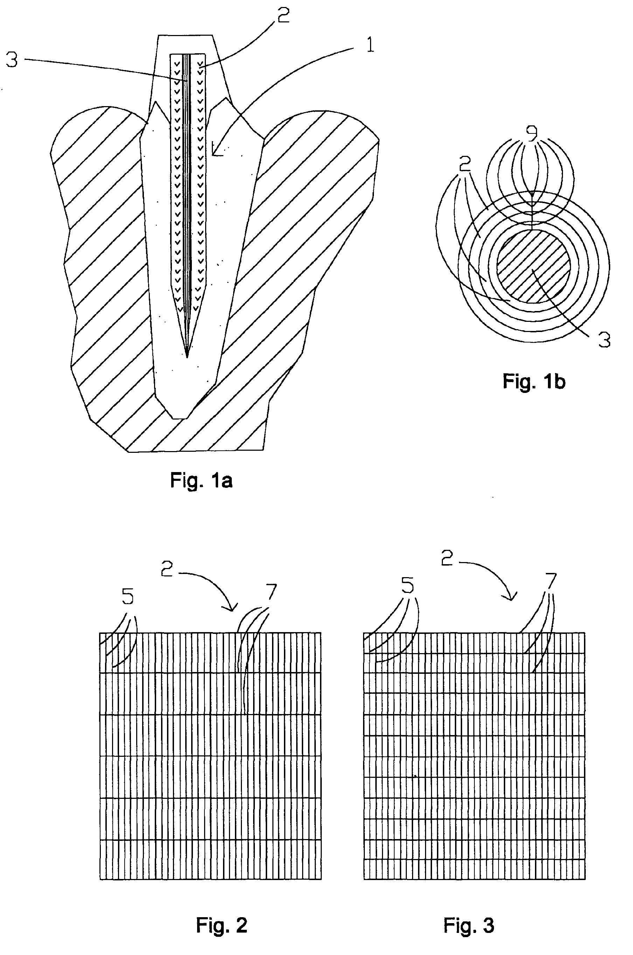

Fig. 1 b shows how the axial edges 9 of the layers of fabric 2 have to be brought together. Overlapping of the edges 9 has in fact to be avoided, given that final grinding of the pin, after polymerisation in the mould, would cause in the area of overlapping of the edges 9 cutting of some fibres of the layers of fabric 2 and consequently alteration to the mechanical properties of the pin in that region.

Several pins of this type have been manufactured wherein the layers of fabric 2 have been placed with a percentage of transverse weft fibres 7 varying from 20% to 40%.

The following is an illustration of the range of values of the mechanical parameters of the pin obtained when the percentage of transverse weft fibres varies from 20% to 40%.

| Parameter | Min. | Max. |
|---|---|---|
| Flexural strength modulus | 17000 | 20000 |
| Shearing strength modulus | 1200 | 1500 |
| Compressive strength modulus | 2500 | 3000 |
| Tractive strength modulus | 16000 | 18000 |

| Parameter | Min. (GPa) | Max. (GPa) |
|---|---|---|
| Young's modulus | 10 | 15 |

For a better understanding of the influence of the composition characteristics of the layers of fibre fabric used to make the pin on the mechanical properties of the resultant pin, a projection of data is also given below, obtained with the aid of a simulation program for electronic processor, relating to a pin having layers of fabric with warp and weft fibres always orthogonal one to the other, but which differs from the pin described above due to the fact that the layers of fabric now have a predetermined percentage of weft fibres, equal to 30% of the fibres of the fabric, and a slant of the warp fibres which varies in relation to the axis of the pin.

| Slant of warp fibres in relation to pin axis (degrees) | Young's modulus (GPa) | Shearing strength modulus (kg/cm²) | Compressiv e strength modulus (kg/cm²) | Tractive strength modulus (kg/cm²) | Flexural strength modulus (kg/cm²) |
|---|---|---|---|---|---|
| 15 | 12-15 | 1000-1500 | 2000-2500 | 18000-20000 | 18000-21000 |
| 30 | 11-15 | 1000-1500 | 2500-3000 | 17000-19000 | 18000-20000 |
| 45 | 11-15 | 1000-1500 | 2500-3000 | 17000-18000 | 17000-19000 |

We have thus given two examples of how the mechanical properties of the pin made in accordance with the present invention can be influenced by the characteristic arrangement of the layers of fibre fabric used.

We have in fact seen that the mechanical properties of the pin of the present invention can be changed by varying the percentage of weft fibres in the fabric of the layer or of the layers, or by varying the slant of the warp fibres in relation to the axis of the pin.

In order to change the mechanical properties of a pin in accordance with the present invention it would likewise be possible to change the angle between the warp fibres and weft fibres of the fabric of the layer or of the layers used, leaving the direction of the warp fibres in relation to the axial direction of the pin unchanged; or by varying the diameter of the fibres used in the layers of fabric; or also by carrying out a combination of two or more of these operations.

The pin of the present invention exploits the anisotropy of the mechanical properties of the fibres, that is to say the fact that the mechanical properties of the fibres depend on the direction of application of a load in relation to the longitudinal axis of the fibres themselves.

Given that there is thus a correlation, known experimentally, between the angle of application of a load in relation to the axis of the fibre and the corresponding value of the mechanical parameters of the fibre, it is necessary to base on this correlation so as to set correctly the compositional characteristics of the layer or of the layers of fibre fabric to be placed on the pin according to the application wherein the same pin is used.

We know that the pin has to carry out different functions in relation to the degree of damage of the coronal zone, to the location of the damaged zone and to the type of material, which is used for prosthetic rehabilitation.

For example, in the case of only partial loss of the coronal portion of the tooth, the pin has to perform a main action of anchorage in that a portion of crown acts as support and restraint. The pin has to provide a modulus of elasticity and shearing strength equal to that of the tooth which holds it.

In the case of total loss of the coronal portion the pin has however to act as anchorage and support for the reconstruction material and also has to distribute evenly on the whole root the forces arising from the mastication loads without causing damage to the structure of the tooth or to the prosthetic reconstruction. Therefore, in addition to the optimal moduli of elasticity and shearing strength, a high modulus of resistance to vertical compression is also required.

In the case of reconstruction of a tooth of the group of molars the pin has to have a modulus of transverse elasticity very close to that of the dentine, while an extremely precise setting of the modulus of resistance to vertical compression is not necessary, given that the mastication loads are distributed also in a transverse direction in addition to the vertical one.

In the case of reconstruction of a tooth of the group of incisors, the pin however has to have also a modulus of resistance to vertical compression very close to that of the dentine, given that the mastication loads are mainly vertical. Contrarily an excessively high modulus of compressive strength would lead to concentration of the forces at the radicular apex with the risk of fracture or sensitivity of the same.

As already seen, only the present invention is able to fulfil these and other possible applications, providing a pin formed by one or more layers of fibre fabric having characteristics of composition, of diameter of the fibres, of arrangement and of orientation on the pin established on each occasion according to the mechanical parameters to be achieved.

## Claims

1. An endocanal pin (1) for dental use **characterised in that** it comprises one or more layers (2) of fibre fabric, embedded in a resinous matrix, which wind around a support core (3) in a composite material arranged along the axis of the pin (1), said one or more layers (2) of fabric conferring to the pin (1) the mechanical parameters suitable for the application required for the pin (1) itself.

2. An endocanal pin (1) according to any one of the previous claims, **characterised in that** some of said one or more layers (2) of fibre fabric are localised in specific points of the support core (3) of the pin (1), in such a way that the combination of said one or more layers (2) of fabric confers to the pin (1) the mechanical parameters also locally suitable for the application required for the pin (1) itself.

3. An endocanal pin (1) according to any one of the previous claims, **characterised in that** the warp fibres of the fabric of said one or more layers (2) on the pin (1) are arranged along the axis of the pin (1), and **in that** the angle between the weft fibres and the warp fibres of the fabric of each layer (2) on the pin (1) are chosen for the determination of the values of the mechanical parameters of the pin (1), such as the modulus of transverse elasticity and the compressive, tractive and shearing strength moduli, which are suitable for the application required for the pin (1) itself.

4. An endocanal pin (1) according to any one of claims 1 and 2, **characterised in that** the angle between the weft fibres and the warp fibres of the fabric of said one or more layers (2) is fixed, and **in that** the angle between the warp fibres of the fabric of said one or more layers (2) on the pin (1) and the axis of the pin (1) is chosen for the determination of the values of the mechanical parameters of the pin (1) such as the modulus of transverse elasticity and the compressive, tractive and shearing strength moduli, which are suitable for the application required for the pin (1) itself.

5. An endocanal pin (1) according to any one of the previous claims, **characterised in that** the percentage of warp fibres in the fabric of said one or more layers (2) on the pin (1) is chosen for the determination of the values of the mechanical parameters of the pin (1), such as the modulus of transverse elasticity and the compressive, tractive and shearing strength moduli, which are suitable for the application required for the pin (1) itself.

6. An endocanal pin (1) according to any one of the previous claims, **characterised in that** the diameter of the fibres in the fabric of said one or more layers (2) on the pin (1) is chosen for the determination of the values of the mechanical parameters of the pin (1), such as the modulus of transverse elasticity and the compressive, tractive and shearing strength moduli, which are suitable for the application required for the pin (1) itself.

7. An endocanal pin (1) according to any one of the previous claims, **characterised in that** the fibres of the fabric of said one or more layers (2) on the pin (1) are fibres with high resistance or with high modulus in carbon or glass or quartz or silica or any other synthetic material available in fibres, embedded in epoxy resin.

8. An endocanal pin (1) according to any one of the previous claims, **characterised in that** said support core (3) of the pin is a rod made in a composite material.

9. A method of production of an endocanal pin (1) in accordance with any one of the previous claims, **characterised in that** it comprises the following phases:
- placing of said one or more layers (2) of fibre fabric pre-impregnated with resin on the central support core (3); and
- moulding for polymerisation of the pin (1).

10. A method of production of an endocanal pin (1) in accordance with any one of claims 1 to 8, **characterised in that** it comprises the following phases:
- placing of said one or more layers (2) of non-impregnated fibre fabric on the central support core (3);
- moulding by injection into the mould of resin to impregnate the fibres of said one or more layers (2), wherein the injector, which performs the injection of resin into the mould, remains connected to the mould under pressure so as to guarantee optimal distribution of the resin and compensation of polymerisation shrinkage.
